# EUROPEAN PATENT SPECIFICATION

(11) **EP 1 909 063 B1**
(45) Date of publication and mention of the grant of the patent: **12.08.2009**
(21) Application number: 07019466.7
(22) Date of filing: 04.10.2007
(51) Int. Cl.: G01B 11/00, G01B 21/04, G01D 5/347

(54) **Vision-measuring-machine calibration scale**
Kalibrierungsskala für optisches Messgerät
Échelle d'étalonnage pour machine de mesure optique

(30) Priority: 06.10.2006 JP 2006275842
(43) Date of publication of application: 09.04.2008
(73) Proprietor: Mitutoyo Corporation, Kawasaki-shi, Kanagawa 213-8533 (JP)
(72) Inventor: Matsumiya, Sadayuki, Kawasaki-shi Kanagawa 213-8533 (JP); Ishizu, Kazuhiro, Kawasaki-shi Kanagawa 213-8533 (JP); Kanno, Ryohei, Kawasaki-shi Kanagawa 213-8533 (JP)
(74) Representative: Grünecker, Kinkeldey, Stockmair & Schwanhäusser Anwaltssozietät

(56) References cited:
- DE-A1- 3 503 116
- US-A- 5 936 723
- US-A1- 2001 003 872

## Description

### BACKGROUND OF THE INVENTION

### 1. FIELD OF THE INVENTION

The present invention relates to a vision-measuring-machine calibration scale. Specifically, the present invention relates to a vision-measuring-machine calibration scale suitably used in an oblique inspection of a vision measuring machine having a coordinate measuring system.

### 2. DESCRIPTION OF RELATED ART

As a device for measuring a profile of a to-be-measured article, vision measuring machines have been known. The vision measuring machines include: a light source that irradiates light to the to-be-measured article; an objective lens that condenses the light irradiated from the light source and light irradiated from the light source and reflected by or transmitted through the to-be-measured article; a CCD (charge-coupled device) camera that captures an image condensed by the objective lens; and an image processor that conducts image-processing such as a contour detection and an edge detection of the to-be-measured object based on image data from the CCD camera (see for instance, JP-A-2000-205822, or JP-A-2001-66112).

Note that the vision measuring machines include various error factors such as an indication accuracy error in a structural body.

Accordingly, an operator of such a measuring machine needs to precisely understand a level of uncertainty in accuracy of a measurement value shown by the measuring machine.

In order to evaluate the errors, a method for calculating a correction parameter is used (for example, JP-A-2005-4391), where a calibration scale having a predetermined plurality of points of which coordinates are known is captured and correction parameters are calculated for each of the predetermined plurality of points based on difference between the known coordinates of the predetermined plurality of points and actual coordinates of the plurality of points in the captured image data.

Regarding the vision measuring machines having the coordinate measuring system, an oblique inspection is known as a method for capturing the calibration scale to evaluate errors in X, Y and Z directions which are orthogonal to each other.

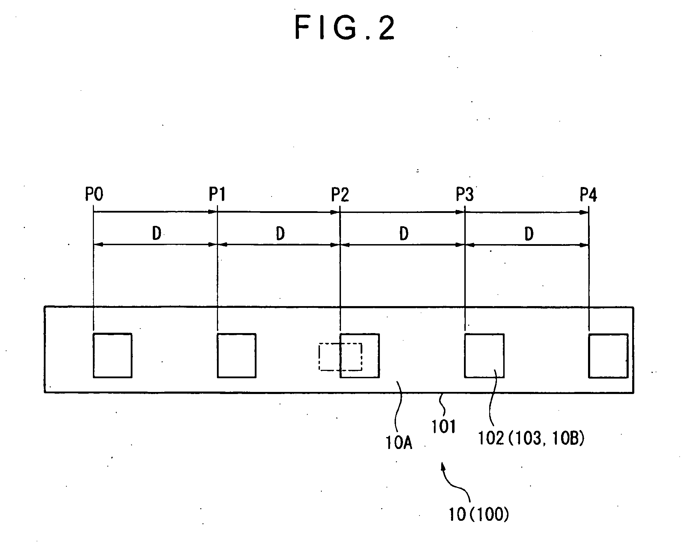

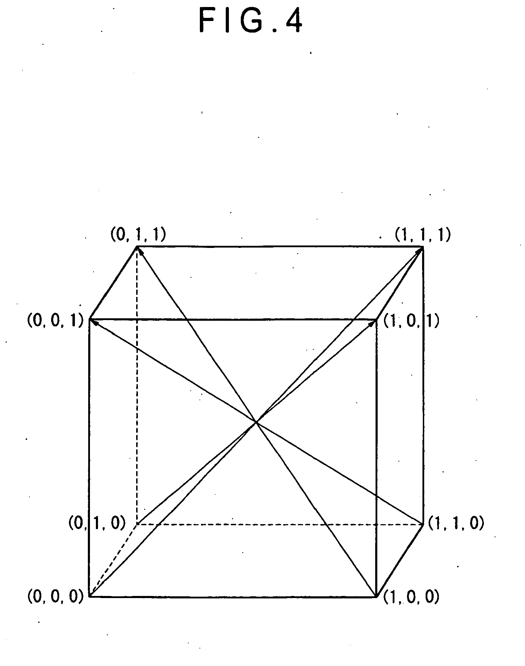

In the oblique inspection, as exemplarily shown in Fig. 2, a calibration scale 100 is sequentially arranged in four diagonal directions in an XYZ measurement space as shown in Fig. 4 and captured from the above, each calibration scale 100 including a scale board 101 (a transparent and rectangular member) and a plurality of metal thin layers 103 disposed on the scale board 101 at regular intervals. The captured image data is used to calculate distances between one of the metal thin layers 103 (an origin P0) and the other metal thin layers 103, thereby obtaining actual measurement values. By calculating differences between the actual measurement values and the known distances between the origin metal thin layer 103 and the other metal thin layers 103, errors in the measuring device are obtained.

However, the above-mentioned oblique inspection accompanies following problems.

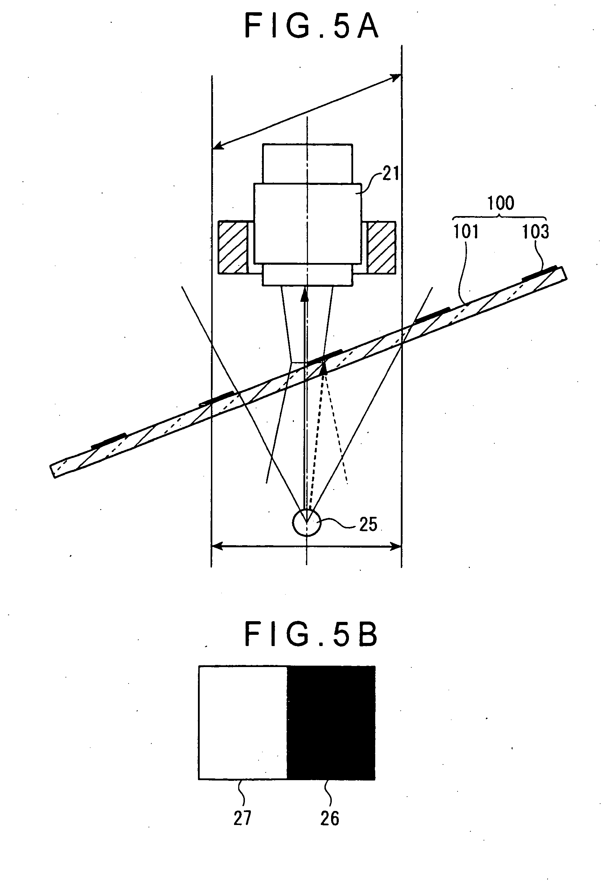

As shown in Fig. 5A, when transmission illumination unit 25 that irradiates light to the to-be-measured article, from a side opposite to an objective lens 21 and interlocks with the objective lens 21 is employed as the light source of the vision measuring machine, image data having uniform brightness cannot be acquired.

As shown in the dotted arrow in Fig. 5A, when the transmission illumination unit 25 is used as the light source of the vision measuring machine, since the metal thin layer 103 shields light, the light irradiated to the metal thin layer 103 does not reach the objective lens 21. On the other hand, as shown in the solid arrow in Fig. 5A, since the scale board 101 transmits light, the light irradiated to the scale board 101 reaches the objective lens 21.

Hence, as shown in Fig. 5B, in the captured imaged data, a portion 26 corresponding to the metal thin layer 103 of the calibration scale 100 is imaged dark and a portion 27 corresponding to the scale board 101 is imaged bright. Accordingly, since an edge of the metal thin layer 103 can be read from the image data, the distances between the predetermined origin metal thin layer 103 and the metal thin layers 103 can be calculated as the actual measurement values.

However, as shown in Fig. 5A, since the transmission illumination unit 25 is horizontally moved, the distance between the obliquely disposed calibration scale 100 and the light source of the transmission illumination unit 25 varies depending on the position of the transmission illumination unit 25, so that it is difficult to obtain image data having uniform brightness all over the calibration scale 100. Note that the objective lens 21 is movable in parallel to the calibration scale 100.

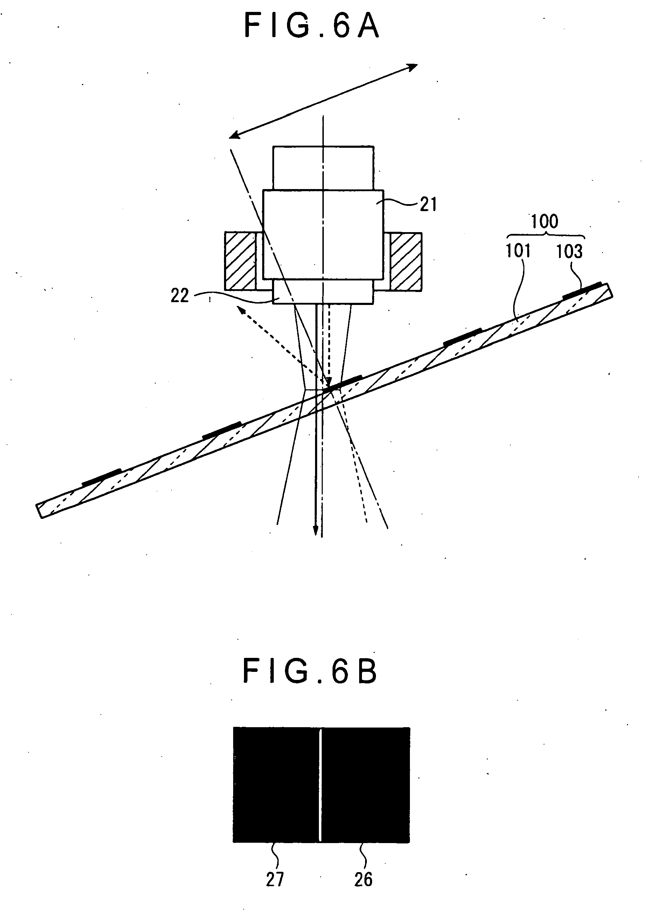

On the other hand, as shown in Fig. 6A, when a vertical illumination unit 22 that irradiates light to the to-be-measured object from the same side as the objective lens 21 is employed as the light source of the vision measuring machine, since the objective lens 21 and the vertical illumination unit 22 are moved in parallel to the calibration scale 100, the distance between the light source of the vertical illumination unit 22 and the calibration scale 100 is constant. Hence, it is possible to obtain the image data having uniform brightness all over the calibration scale 100. However, the brightness of the image data is not sufficient when the vertical illumination unit 22 is used in the oblique inspection.

Specifically, as shown in the dotted arrow in Fig. 6A, although the metal thin layer 103 reflects the light, since the calibration scale 100 is obliquely disposed, not much of the light reflected by the metal thin layer 103 reaches the objective lens 21. On the other hand, as shown in the solid arrow in Fig. 6A, since the scale board 101 transmits light without reflecting the light, all of the light irradiated onto the scale board 101 cannot reach the objective lens 21 without being reflected.

Accordingly, as shown in Fig. 6B, both of the portion 26 corresponding to the metal thin layer 103 and the portion 27 corresponding to the scale board 101 are imaged dark in the captured image data, so that an edge of the metal thin layer 103 cannot be read from the image data. As a result, the distances between the predetermined origin metal thin layer 103 and the other metal thin layers 103 cannot be calculated from the captured image data.

US-A-5936723 discloses a plurality of retroreflection means provided on a rear side, which are disposed so that superposition between the retroreflector and the transmissive areas on a front side is reduced from the longitudinal center of the transparent substrate toward both ends of the scale body.

### SUMMARY OF THE INVENTION

An object of the present invention is to solve the aforesaid problems by providing a vision-measuring-machine calibration scale with which uniformly and sufficiently bright image data can be obtained in an oblique inspection of a vision measuring machine having a coordinate measuring system and a vertical illumination unit.

A vision-measuring-machine calibration scale according to an aspect of the invention includes: a scale body having a light-transmissive region and a light-shielding region that are arranged on a front surface of the scale body in a predetermined pattern; and a retroreflector provided on the side of a rear surface of the scale body retroreflects transmitted light irradiated from the side of the front surface of the scale body and transmitted through the scale body. It is characterised in that the retroreflector surface has substantially the same shape as the scale body, in that the retroreflector is detachably provided on the side of the rear surface of the scale body, such that the retroreflector can be easily attached and detached, and in that the retroreflector includes a base and a retroreflecting member provided on a surface of the base.

When the vision-measuring-machine calibration scale is applied to an oblique inspection of a vision measuring machine having a coordinate measuring system and a vertical illumination unit, light irradiated on the light-transmissive region of the scale body from the vertical illumination unit is transmitted through the light-transmissive region of the scale body, retroreflected by the retroreflector and transmitted again through the light-transmissive region of the scale body to enter an objective lens of the vision measuring machine. On the other hand, light irradiated on the light-shielding region of the scale body is reflected in a direction different from that by the objective lens or absorbed in the light-shielding region.

Hence, in captured image data, the light-transmissive region of the scale body is imaged uniformly and sufficiently bright and the light-shielding region thereof is imaged dark. Accordingly, coordinates of the boundary of the light-transmissive region and the light-shielding region can be clearly read from the image data. Based on difference between the actually-measured coordinates and known coordinates of the light-shielding region, errors in the measuring machine can be obtained.

Moreover, since the retroreflector can be removed from the scale body, the scale body can be also used in an evaluation for errors by other than the oblique inspection of the vision-measuring machine having the vertical illumination unit.

Specifically, the scale body with the retroreflector removed can be used in the oblique inspection of the vision measuring machine having a transmission illumination unit. However, when the vision-measuring-machine calibration scale of the present invention is used in the transmission illumination unit, it is difficult to obtain a uniform light amount all over the scale body, so that the boundary between the light-transmissive region and the light-shielding region of the image of the scale body may be obscured, thereby deteriorating measurement accuracy.

When the scale body with the retroreflector removed is horizontally disposed in X or Y direction of the vision measuring machine having the transmission illumination unit, errors in X or Y direction can be evaluated.

The retroreflector can be easily obtained only by providing a general retroreflecting member such as a retroreflecting sheet on a surface of the base in a suitable manner. In addition, since the retroreflector is a plate having the base and the retroreflecting member attached on the surface of the base, when the retroreflector is detachable from the scale body, the retroreflector can be easily handled when being attached or detached.

Note that the retroreflecting member may be a glass-bead type or a cube-corner type as long as the retroreflecting member exhibits retroreflectiveness. The base may be any type as long as the base has a plate-like shape and is made of hard material. For example, the base may be made of glass or synthetic resin.

In the vision-measuring-machine calibration scale, the retroreflector may be spaced apart from the rear surface of the scale body with a predetermined gap.

According to this arrangement, since the retroreflector is spaced apart from the rear surface of the scale body with a predetermined gap such that the rear surface of the scale body does not contact the surface of the retroreflector, when the retroreflector is detachable from the scale body, either of the surfaces of the retroreflector and the scale body or both of them will not be damaged by a contact therebetween in attaching or detaching the retroreflector, thereby preventing deterioration in transparency and/or retroreflection.

In the vision-measuring-machine calibration scale, the scale body includes a light-transmissive scale board and a light-shielding covering layer arranged on a surface of the scale board in a predetermined pattern, the light-transmissive region is an area of the surface of the scale body that is not occupied by the covering layer, and the light-shielding region is an area of the surface of the scale body that is occupied by the covering layer.

According to this arrangement, since the scale body can be produced by providing the light-shielding covering layers on the light-transmissive scale board in a suitable manner, the pattern of the covering layers can be changed depending on application purposes.

Note that the scale board may be any as long as the scale board has light transmission characteristics. For example, the scale board may be a transparent board made of glass or synthetic resin.

The covering layer may be any as long as the covering layer transmits no light such as a thin layer made of metal or metal oxide and a coating film made of opaque coating material.

In the vision-measuring-machine calibration scale, the scale board may be a glass plate and the covering layer may be a metal thin layer formed by vapor deposition.

According to this arrangement, the scale body can be produced by providing the metal thin layer on the glass plate using vapor deposition which is widely used for providing a thin layer.

The scale body is a generally-used vision-measuring-machine calibration scale. Hence, only by providing the retroreflector on an existing vision-measuring-machine calibration scale, sufficiently and uniformly bright image data can be obtained during the oblique inspection using the vision measuring machine having the coordinate measuring system and the vertical illumination unit, so that a vision-measuring-machine calibration scale that allows clear reading of the coordinates of edges of the metal thin layer can be achieved.

### BRIEF DESCRIPTION OF THE DRAWINGS

Fig. 1A is a front view of an oblique inspection of a vision measuring machine having a vertical illumination unit, in which a vision-measuring-machine calibration scale according to an embodiment is used;
Fig. 1B shows image data captured in Fig. 1A;
Fig. 2 shows a scale body of the vision-measuring-machine calibration scale according to the embodiment;
Fig. 3A is a front view of an inspection in which the vision-measuring-machine calibration scale is horizontally disposed according to the embodiment;
Fig. 3B shows image data captured in Fig. 3A;
Fig. 4 schematically shows an XYZ measurement space of the vision measuring machine;
Fig. 5A is a front view of the oblique inspection of the vision measuring machine having a transmission illumination unit, in which the vision-measuring-machine calibration scale according to the embodiment is used;
Fig. 5B shows image data captured in Fig. 5A;
Fig. 6A is a front view of the oblique inspection of the vision measuring machine having the vertical illumination unit, in which an existing vision-measuring-machine calibration scale is used; and
Fig. 6B shows image data captured in Fig. 6A.

### DETAILED DESCRIPTION OF PREFERRED EMBODIMENT(S)

An embodiment according to the present invention will be described below with reference to the drawings.

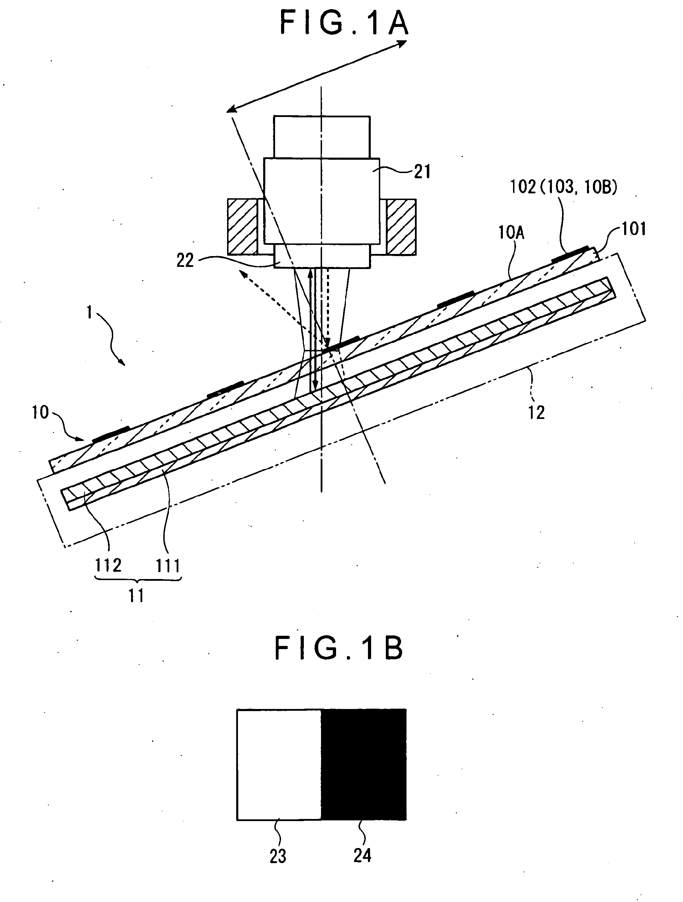

As shown in Fig. 1A, a vision-measuring-machine calibration scale 1 of the embodiment includes: a scale body 10 having light-transmissive regions 10A and light-shielding regions 10B arranged on a front surface of the scale body 10 in a predetermined pattern; a retroreflector 11 that is provided on a rear surface of the scale body 10 and retroreflects transmitted light irradiated from the side of the front surface of the scale body 10 and transmitted through the scale body 10; and a substantially-rectangular calibration unit 12 that supports the retroreflector 11 therein and is detachable to the scale body 10.

As shown in Fig. 2, the scale body 10 has a light-transmissive scale board 101 in an elongated rectangular shape and a plurality of light-shielding covering layers 102 arranged on a surface of the scale board 101 at a regular interval. An area of the surface of the scale body 10 which is not occupied by the covering layers 102 is the light-transmissive regions 10A of the scale body 10. The other area of the surface of the scale body 10 on which the covering layers 102 are provided is the light-shielding regions 10B of the scale body 10.

The scale board 101 is a transparent glass plate in an elongated rectangular shape. The covering layers 102 are the rectangular metal thin layers 103 made of chromium by vapor deposition. The metal thin layers 103 are disposed with an equal distance between edges of the adjacent metal thin layers 103.

As shown in Fig. 1A, the retroreflector 11 has a base 111 and a retroreflecting member 112 provided on a surface of the base 111.

The base 111 of the retroreflector 11 is an elongated-rectangular member of which surface has a shape substantially the same as that of the scale board 101 of the scale body 10. The retroreflecting member 112 is a glass-bead retroreflecting sheet and is adhered on the surface of the base 111.

The calibration unit 12 is a substantially-rectangular hollow member and supports the scale body 10 on one surface thereof in a detachable manner while supporting the retroreflector 11 therein in parallel to the scale body 10. Accordingly, the retroreflector 11 is provided on the side of the rear surface of the scale body 10 in a detachable manner.

The scale body 10 is supported such that a side provided with the covering layers 102 is directed to an outside of the calibration unit 12. The retroreflector 11 is disposed such that a side provided with the retroreflecting member 112 opposes to the rear surface of the scale body 10 with a predetermined gap from the rear surface of the scale body 10.

A process for conducting an oblique inspection by a vision measuring machine having a coordinate measuring system and a vertical illumination unit with the use of the above-described vision-measuring-machine calibration scale 1 will be described below.

As shown in Fig. 1A, the vision-measuring-machine calibration scale 1 is located below an objective lens 21 of the vision measuring machine having the vertical illumination unit 22, where the calibration scale 1 is sequentially arranged at positions in four diagonal directions in an XYZ measurement space. Then, an edge of the metal thin layer 103 is captured while the objective lens 21 is moved in parallel to the vision-measuring-machine calibration scale 1 or while the objective lens 21 and the vision-measuring-machine calibration scale 1 are relatively moved in parallel to each other.

As shown in the solid arrow in Fig. 1A, light irradiated from the vertical illumination unit 22 of the vision measuring machine to the light-transmissive regions 10A of the scale body 10 is transmitted through the light-transmissive regions 10A of the scale body 10, retroreflected by the retroreflector 11 and transmitted again through the light-transmissive regions 10A. of the scale body 10 to enter the objective lens 21 of the vision measuring machine. On the other hand, as shown in the dotted arrow, light irradiated on the light-shielding regions 10B of the scale body 10 is reflected in a direction different from that by the objective lens 21 and is difficult to enter the objective lens 21.

Hence, as shown in Fig. 1B, in the captured imaged data, a portion 23 corresponding to the light-transmissive region 10A of the scale body 10 is imaged bright and a portion 24 corresponding to the light-shielding region 10B is imaged dark.

Then, an image processor of the vision measuring machine reads coordinates of the boundary of the light-transmissive region 10A and the light-shielding region 10B from the image data and stores the read coordinates. Based on a plurality of the coordinates stored by capturing edges of the metal thin layers 103, a computer of the vision measuring machine calculates distances between an origin metal thin layer 103 and the other metal thin layers as actual measurement values. Based on difference between the actual measurement values and the known distances between the origin metal thin layer 103 and the other metal thin layers, errors in the vision measuring machine can be obtained.

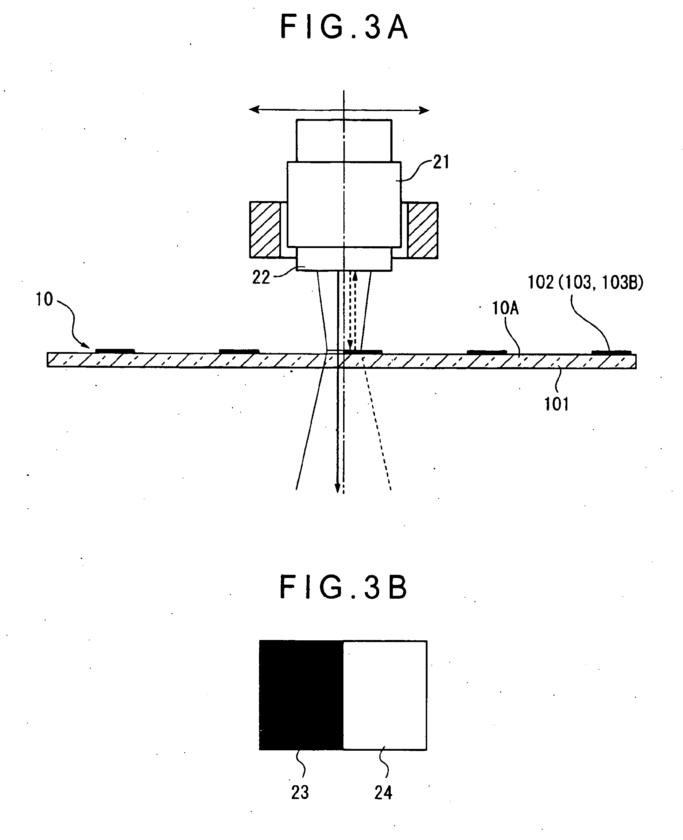

The present embodiment can provide following advantages.
(1) When the image is captured, since the image data in which the light-transmissive regions 10A of the scale body 10 are imaged uniformly and sufficiently bright and the light-shielding regions 10B are imaged dark can be obtained, the coordinates of the boundary of the light-transmissive region 10A and the light-shielding region 10B of the scale body 10 can be clearly read from the image data, so that the distances between the origin metal thin layer 103 and the other metal thin layers 103 can be calculated as the actual measurement values. Based on the difference between the actual measurement values and the known distances between the origin metal thin layer 103 and the other metal thin layers, errors in the vision measuring machine can be obtained.
(2) Since the retroreflector 11 can be removed from the scale body 10, the scale body 10 can be also used in an evaluation for errors by other than the oblique inspection of the vision-measuring machine having the vertical illumination unit 22.
   Specifically, the scale body 10 with the retroreflector removed can be used for oblique inspection of the vision measuring machine having transmission illumination unit. However, in the case of the transmission illumination unit, it is difficult to obtain a uniform light amount all over the scale body 10, so that the boundary between the light-transmissive region 10A and the light-shielding region 10B of the image data of the scale body 10 may be obscured, thereby deteriorating measurement accuracy.
   When the scale body 10 with the retroreflector 11 removed is horizontally disposed in X or Y direction of the vision measuring machine, errors in X or Y direction can be evaluated irrespective of which one of the vision measuring machine is employed i.e. the transmission illumination unit or the vertical illumination unit 22.
   For instance, as shown in Fig. 3A, in the case of the vision measuring machine having the vertical illumination unit 22, when the retroreflector 11 and the calibration unit 12 are removed from the scale body 10 and only the scale body 10 is horizontally disposed in X or Y direction of the vision measuring machine, the light irradiated on the light-transmissive region 10A of the scale body 10 from the vertical illumination unit 22 passes through the light-transmissive region 10A of the scale body 10 (as shown in the solid arrow), so that no light enters the objective lens 21 of the vision measuring machine. On the other hand, as shown in the dotted arrow, the light irradiated on the light-shielding regions 10B of the scale body 10 is reflected by the metal thin layer 103 to enter the objective lens 21 of the vision measuring machine.
   Hence, as shown in Fig. 3B, in the captured imaged data, the portion .23 corresponding to the light-transmissive region 10A of the scale body 10 is imaged dark and the portion 24 corresponding to the light-shielding region 10B is imaged bright. Accordingly, since the boundary between the light-transmissive region 10A and the light-shielding region 10B can be read from the image data, the distances between the origin metal thin layer 103 and the other metal thin layers 103 can be calculated as the actual measurement values. Based on the difference in the vision measuring machine between the actual measurement values and the known distances between the origin metal thin layer 103 and the other metal thin layers, errors in the vision measuring machine can be obtained.
(3) Since the retroreflecting member 112 is a general glass-bead retroreflecting sheet, which is readily available, the retroreflector 11 can be easily made by adhering the retroreflecting sheet on the base 111. In addition, since the base 111 is an elongated rectangular member and the retroreflector 11 has a plate-like shape as a whole, such components are light in weight and easy to handle. In particular, with the retroreflector 11 being detachable from the scale body 10, the retroreflector 11 can be easily attached and detached.
(4) Since the retroreflector 11 is spaced apart from the rear surface of the scale body 10 with a predetermined gap such that the rear surface of the scale body 10 does not contact the surface of the retroreflector 11, either of the surfaces of the retroreflector 11 and the scale body 10 or both of them will not be damaged by a contact therebetween during attaching or detaching the retroreflector 11, thereby preventing reduction in transparency and/or retroreflection.
(5) Since the scale body 10 can be produced by providing the light-shielding covering layers 102 on the light-transmissive scale board 101 in a suitable manner, the pattern of the covering layers 102 can be changed depending on application purposes.
(6) The scale body 10 can be attained by providing the metal thin layer 103 on the glass plate using vapor deposition which is widely used for providing a thin layer.
(7) The scale body 10 is a generally-used vision-measuring-machine calibration scale. Hence, only by providing the retroreflector 11 and the calibration unit 12 on an existing vision-measuring-machine calibration scale, sufficiently and uniformly bright image data can be obtained in the oblique inspection having the coordinate measuring system and the vertical illumination unit 22, so that the vision-measuring-machine calibration scale 1 according to the present embodiment that allows clear reading of the coordinates of edges of the metal thin layer 103 can be achieved.

Note that the scope of the present invention is not limited to the above-described embodiment but includes other arrangements and following modifications as long as an object of the invention can be attained.
(i) The retroreflecting member 112 is not limited to the glass-bead retroreflecting sheet illustrated in the aforesaid embodiment. For example, a cube-corner retroreflecting sheet may alternatively be employed. In addition, the retroreflecting sheet may either be soft or hard.
(ii) The retroreflecting member 11 may not be fixed to the scale body 10 by the calibration unit 12 of the aforesaid embodiment. For example, the retroreflector 11 may be screwed to the scale body 10. With this arrangement, the number of components can be reduced, thereby reducing the costs.

## Claims

1. A vision-measuring-machine calibration scale, comprising:
a scale body (10) having a light-transmissive region (10A) and a light-shielding region (10B) that are arranged on a front surface of the scale body (10) in a predetermined pattern; and
a retroreflector (11) provided on the side of a rear surface of the scale body (10) and retroreflecting transmitted light irradiated from the side of the front surface of the scale body (10) and transmitted through the scale body (10),
**characterised in that** the retroreflector surface has substantially the same shape as the scale body, **in that**
the retroreflector (11) is detachably provided on the side of the rear surface of the scale body (10), such that the retroreflector (11) can be easily attached and detached, and **in that** the retroreflector (11) includes a base (111) and a retroreflecting member (112) provided on a surface of the base (111).

2. The vision-measuring-machine calibration scale (1) according to claim 1, wherein the retroreflector (11) is spaced apart from the rear surface of the scale body (10) with a predetermined gap.

3. The vision-measuring-machine calibration scale (1) according to claim 1 or 2, wherein the scale body (10) includes:
a light-transmissive scale board (101) and
a light-shielding covering layer (102) arranged on a surface of the scale board (101) in a predetermined pattern,
the light-transmissive region (10A) is an area of the surface of the scale body (10) that is not occupied by the covering layer (102), and
the light-shielding region (10B) is an area of the surface of the scale body (10) that is occupied by the covering layer (102).

4. The vision-measuring-machine calibration scale (1) according to claim 3, wherein the scale board (101) is a glass plate, and the covering layer (102) is a metal thin layer (103) formed by vapor deposition.

## Patentansprüche

1. Kalibrierungsskala für ein optisches Messgerät, die folgendes umfasst:
einen Skalenkörper (10) mit einem lichtdurchlässigen Bereich (10a) und einem Lichtabschirmbereich (10b), die an einer Vorderseite des Skalenkörpers (10) in einem vorbestimmten Muster angeordnet sind; und
eine Rückreflexionsvorrichtung (11), die auf einer Seite einer Rückfläche des Skalenkörpers (10) bereitgestellt ist, und die durchgelassenes Licht, das von der Seite der Vorderfläche des Skalenkörpers (10) eingestrahlt wurde und durch den Skalenkörper (10) durchgelassen wurde, zurückreflektiert,
**dadurch gekennzeichnet, dass**
die Rückreflexionsfläche im Wesentlichen die selbe Form aufweist wie der Skalenkörper,
dass die Rückreflexionseinrichtung (11) lösbar auf der Seite der Rückfläche des Skalenkörpers (10) bereitgestellt ist, so dass die Rückreflexionseinrichtung (11) leicht angebracht und entfernt werden kann, und
dass die Rückreflexionseinrichtung (11) eine Basis (111) und ein Rückreflexionselement (112), das an der Oberfläche der Basis (111) bereitgestellt ist, einschließt.

2. Kalibrierungsskala (1) für ein optisches Messgerät nach Anspruch 1, worin die Rückreflexionseinrichtung (11) von der Rückfläche des Skalenkörpers (10) um einen vorbestimmten Abstand beabstandet ist.

3. Kalibrierungsskala (1) für ein optisches Messgerät nach Anspruch 1 oder 2, worin der Skalenkörper (10) folgendes einschließt:
ein lichtdurchlässiges Skalenbrett (101) und eine lichtabschirmende Deckschicht (102), die an einer Oberfläche des Skalenbretts (101) in einem vorbestimmten Muster angeordnet ist,
wobei sich der lichtdurchlässige Bereich (10a) in einem Bereich der Oberfläche des Skalenkörpers (10) befindet, der nicht durch die Deckschicht (102) belegt ist, und
wobei sich der Lichtabschirmbereich (10b) in einem Oberflächenbereich des Skalenkörpers (10) befindet, der von der Deckschicht (102) belegt ist.

4. Kalibrierungsskala (1) der optischen Messvorrichtung nach Anspruch 3, worin das Skalenbrett (101) eine Glasplatte ist, und die Deckschicht (102) eine metallische Dünnschicht (103) ist, die durch Dampfabscheidung gebildet wurde.

## Revendications

1. Échelle de calibrage d'une machine de mesure par vision, comprenant :
un corps d'échelle (10) ayant une zone laissant passer la lumière (10A) et une zone ne laissant pas passer la lumière (10B) qui sont agencées sur une surface avant du corps d'échelle (10) en un motif prédéterminé ; et
un rétroréflecteur (11) agencé sur le côté d'une surface arrière du corps d'échelle (10) et réfléchissant une lumière transmise rayonnée depuis le côté de la surface avant du corps d'échelle (10) et transmise à travers le corps d'échelle (10),
**caractérisée en ce que** la surface du rétroréflecteur a sensiblement la même forme que le corps d'échelle, **en ce que** le rétroréflecteur (11) est agencé de manière séparable sur le côté de la surface arrière du corps d'échelle (10), de sorte que le rétroréflecteur 11 peut être facilement fixé et séparé, et **en ce que** le rétroréflecteur (11) inclut une base (111) et un élément rétroréfléchissant (112) agencé sur une surface de la base (111).

2. Échelle de calibrage d'une machine de mesure par vision (1) selon la revendication 1, dans laquelle le rétroréflecteur (11) est séparé de la surface arrière du corps d'échelle (11) par un espace prédéterminé.

3. Échelle de calibrage d'une machine de mesure par vision (1) selon la revendication 1 ou 2, dans laquelle le corps d'échelle (10) inclut :
un panneau d'échelle laissant passer la lumière (101) et
une couche de recouvrement ne laissant pas passer la lumière (102) agencée sur une surface du panneau d'échelle (101) en un motif prédéterminé,
la zone laissant passer la lumière (10A) est une région de la surface du corps d'échelle (10) qui n'est pas occupée par la couche de recouvrement (102), et
la zone ne laissant pas passer la lumière (10B) est une région de la surface du corps d'échelle (10) qui est occupée par la couche de recouvrement (102).

4. Échelle de calibrage d'une machine de mesure par vision (1) selon la revendication 3, dans laquelle le panneau d'échelle (101) est une plaque de verre, et la couche de recouvrement (102) est une mince couche de métal (103) formée par un dépôt en phase vapeur.
